# EUROPEAN PATENT APPLICATION

(11) **EP 2 991 412 A1**
(43) Date of publication of application: **02.03.2016**
(21) Application number: 14797060.2
(22) Date of filing: 15.05.2014
(51) Int. Cl.: H04W 52/04, H04L 25/03

(54) **SIGNAL ADJUSTING METHOD, APPARATUS, AND CELL**

(30) Priority: 15.05.2013 CN 201310179709
(71) Applicant: Huawei Technologies Co., Ltd., Longgang District Shenzhen, Guangdong 518129 (CN)
(72) Inventor: GUAN, Lu, Shenzhen Guangdong 518129 (CN); YI, Xiongshu, Shenzhen Guangdong 518129 (CN)
(74) Representative: Maiwald Patentanwalts GmbH
(86) International application number: PCT/CN2014/077590
(87) International publication number: WO 2014/183662

(57) **Abstract**

The present invention provides a signal adjustment method and apparatus, and a cell, which are used to adjust power at which a first cell transmits a calibration signal. The method includes: transmitting, by the first cell, a calibration signal to a second cell at preset power, so that the second cell determines whether power of the calibration signal received by the second cell is consistent with reference power; and receiving, by the first cell, a determining result returned by the second cell, and adjusting, according to the determining result, the power at which the calibration signal is transmitted, so that the power of the calibration signal received by the second cell is consistent with the reference power. By means of such a solution, technical support is provided for a process of joint calibration of cells, and normal implementation of joint calibration of multiple cells is ensured.

## Description

### TECHNICAL FIELD

The present invention relates to the field of communications technologies, and in particular, to a signal adjustment method and apparatus, and a cell.

### BACKGROUND

A large quantity of distributed base station architectures are used in 3G networks. A base band unit BBU (Base Band Unit) and a radio remote unit RRU (Radio Remote Unit) may be included in a base station, where the BBU and the RRU are connected by using an optical fiber, and one BBU may be connected to multiple RRUs. Such a BBU+RRU multichannel solution can effectively resolve a problem of indoor coverage of a large building.

According to requirements of actual applications, the RRU has two types of radio frequency channels: one being a radio frequency channel used for normal service communication, referred to as a service channel, and including a service transmit channel and a service receive channel; and the other being a radio frequency channel used to calibrate the service channel, referred to as a calibration channel, and including a calibration transmit channel and a calibration receive channel. Further, calibration processes of RRUs may be classified into two types: self-calibration of a single RRU and joint calibration of multiple RRUs. Self-calibration of a single RRU needs to ensure that ratios of transmit channel responses to receive channel responses of any two radio frequency channels in a system cell are the same; joint calibration of multiple RRUs needs to ensure that ratios of transmit channel responses to receive channel responses of any two radio frequency channels in multiple system cells are the same.

When joint calibration of multiple RRUs is performed, different manners are used for different types of RRUs. If the calibration channel is provided with a calibration interface outside an RRU, such a type of RRU is referred to as an RRU having an external calibration function, and in this case, the RRU having an external calibration function may exchange a calibration signal with another RRU through the calibration channel and the calibration interface by means of cable connection or other means, thereby implementing joint calibration of multiple RRUs. If the calibration channel is not provided with a calibration interface outside an RRU, such a type of RRU is referred to as an RRU having an internal calibration function, and in this case, the RRU having an internal calibration function cannot directly exchange a calibration signal with another RRU through the calibration channel, and can transfer the calibration signal only through the service channel. However, compared with the calibration channel, the transmit channel of the service channel has high power amplification and the receive channel has low noise amplification. Therefore, during transfer, a calibration signal is processed in two processes, that is, a high power amplification process and a low noise amplification process, so that joint calibration has the following problems:

For a scenario of low isolation between antennas of different RRUs, a case in which a received calibration signal is excessively large may occur, so that a radio frequency front-end is saturated; or, in a scenario of high isolation, a case in which a received calibration signal is excessively small may occur, so that the calibration signal is overwhelmed. That is, when RRUs having an internal calibration function perform joint calibration, there is a high requirement on strength of the received calibration signal, and both an excessively large signal and an excessively small signal affect normal receiving of the calibration signal, which finally affects implementation of joint calibration of multiple RRUs.

### SUMMARY

A signal adjustment method and apparatus, and a cell according to embodiments of the present invention are used to ensure normal implementation of joint calibration of radio remote units by adjusting power of a signal.

Therefore, the embodiments of the present invention provide the following technical solutions:

According to a first aspect, an embodiment of the present invention provides a signal adjustment method, used to adjust power at which a first cell transmits a calibration signal, where the method includes:
transmitting, by the first cell, a calibration signal to a second cell at preset power, so that the second cell determines whether power of the calibration signal received by the second cell is consistent with reference power; and
receiving, by the first cell, a determining result returned by the second cell, and when the determining result indicates that the power of the calibration signal received by the second cell is inconsistent with the reference power, adjusting, according to the determining result, the power at which the calibration signal is transmitted, so that the power of the calibration signal received by the second cell is consistent with the reference power.

In a first possible implementation manner of the first aspect, if the determining result includes a power adjustment indication, the adjusting, according to the determining result, the power at which the calibration signal is transmitted includes:
gradually adjusting, by the first cell according to the power adjustment indication and a preset step size, the power at which the calibration signal is transmitted, until the power of the calibration signal received by the second cell is consistent with the reference power.

In a second possible implementation manner of the first aspect, if the determining result includes a power adjustment indication and an adjustment numerical value, the adjusting, according to the determining result, the power at which the calibration signal is transmitted includes:
adjusting, by the first cell according to the power adjustment indication and the adjustment numerical value, the power at which the calibration signal is transmitted.

With reference to the first aspect and the first or second possible implementation manner of the first aspect, in a third possible implementation manner, a manner for adjusting, by the first cell, the power at which the calibration signal is transmitted is:
adjusting, by using an attenuator, the power at which the calibration signal is transmitted, and/or adjusting, by using a baseband signal in a digital domain, the power at which the calibration signal is transmitted.

With reference to the first aspect and any one of the first to third possible implementation manners of the first aspect, in a fourth possible implementation manner, the determining, by the second cell, whether power of the calibration signal received by the second cell is consistent with reference power includes:
receiving, by a radio remote unit of the second cell, the calibration signal, and determining, by a base band unit of the second cell, whether the power of the calibration signal is consistent with the reference power.

With reference to the first aspect and any one of the first to third possible implementation manners of the first aspect, in a fifth possible implementation manner, the receiving, by the first cell, a determining result returned by the second cell, and adjusting, according to the determining result, the power at which the calibration signal is transmitted includes:
receiving, by a radio remote unit of the first cell, the determining result, and controlling, by a base band unit of the first cell according to the determining result, the radio remote unit of the first cell to adjust the power at which the calibration signal is transmitted.

According to a second aspect, an embodiment of the present invention provides a signal adjustment method, used to adjust power of a calibration signal received by a first cell, where the method includes:
receiving, by the first cell, a calibration signal sent by a second cell; and
measuring, by the first cell, power of the received calibration signal, determining whether the power is consistent with reference power, and if the power is inconsistent with the reference power, adjusting the power of the calibration signal received by the first cell, so that the power of the calibration signal received by the first cell is consistent with the reference power.

In a first possible implementation manner of the second aspect, the adjusting the power of the calibration signal received by the first cell includes:
gradually adjusting, by the first cell according to a preset step size, the power of the calibration signal received by the first cell, until the power of the calibration signal received by the first cell is consistent with the reference power.

In a second possible implementation manner of the second aspect, the adjusting the power of the calibration signal received by the first cell includes:
calculating, by the first cell, a difference between the power of the received calibration signal and the reference power, and adjusting, according to the difference, the power of the calibration signal received by the first cell.

With reference to the second aspect and the first or second possible implementation manner of the second aspect, in a third possible implementation manner, a manner for adjusting the power of the calibration signal received by the first cell is:
adjusting the power of the received calibration signal by using an attenuator.

With reference to the second aspect and any one of the first to third possible implementation manners of the second aspect, in a fourth possible implementation manner, the measuring, by the first cell, power of the received calibration signal, and determining whether the power is consistent with reference power includes:
measuring, by a base band unit of the first cell, the power of the calibration signal received by a radio remote unit of the first cell, and determining whether the power is consistent with the reference power.

With reference to the second aspect and the first to third possible implementation manners of the second aspect, in a fifth possible implementation manner, the adjusting the power of the calibration signal received by the first cell includes:
controlling, by a base band unit of the first cell, a radio remote unit of the first cell to adjust the power of the received calibration signal.

According to a third aspect, an embodiment of the present invention provides a signal adjustment apparatus, configured to adjust power at which a first cell transmits a calibration signal, where the apparatus includes a transmit unit, a receive unit, a control unit, and an adjusting unit, where:
the transmit unit is configured to transmit a calibration signal to a second cell at preset power, so that the second cell determines whether power of the calibration signal received by the second cell is consistent with reference power;
the receive unit is configured to receive a determining result returned by the second cell; and
the control unit is configured to: when the determining result received by the receive unit indicates that the power of the calibration signal received by the second cell is inconsistent with the reference power, control the adjusting unit to adjust, according to the determining result, the power at which the transmit unit transmits the calibration signal, so that the power of the calibration signal received by the second cell is consistent with the reference power.

In a first possible implementation manner of the third aspect, if the determining result includes a power adjustment indication,
the control unit is specifically configured to control the adjusting unit to gradually adjust, according to the power adjustment indication and a preset step size, the power at which the transmit unit transmits the calibration signal, until the power of the calibration signal received by the second cell is consistent with the reference power.

In a second possible implementation manner of the third aspect, if the determining result includes a power adjustment indication and an adjustment numerical value,
the control unit is specifically configured to control the adjusting unit to adjust, according to the power adjustment indication and the adjustment numerical value, the power at which the transmit unit transmits the calibration signal.

According to a fourth aspect, an embodiment of the present invention provides a signal adjustment apparatus, configured to adjust power of a calibration signal received by a first cell, where the apparatus includes a receive unit, a determining unit, a control unit, and an adjusting unit, where:
the receive unit is configured to receive a calibration signal sent by a second cell;
the determining unit is configured to measure power of the calibration signal received by the receive unit, and determine whether the power is consistent with reference power; and
the control unit is configured to: when the determining unit determines that the power is inconsistent with the reference power, control the adjusting unit to adjust the power of the calibration signal received by the receive unit, so that the power of the calibration signal received by the receive unit is consistent with the reference power.

In a first possible implementation manner of the fourth aspect, the control unit is specifically configured to control the adjusting unit to gradually adjust, according to a preset step size, the power of the calibration signal received by the receive unit, until the power of the calibration signal received by the receive unit is consistent with the reference power.

In a second possible implementation manner of the fourth aspect, the control unit is specifically configured to calculate a difference between the power of the calibration signal received by the receive unit and the reference power, and control the adjusting unit to adjust, according to the difference, the power of the calibration signal received by the receive unit.

According to a fifth aspect, an embodiment of the present invention provides a cell, where the cell includes a base band unit and at least one radio remote unit, the radio remote unit includes a service channel, and the service channel corresponds to an external interface that can communicate with another cell, where:
the radio remote unit further includes a power adjustment module, and the power adjustment module is connected in series between a service channel and an external interface that are of any radio remote unit; and
the power adjustment module is configured to adjust, under control of the base band unit, power at which the cell transmits a calibration signal, or is configured to adjust, under control of the base band unit, power of a calibration signal received by the cell.

In a first possible implementation manner of the fifth aspect, the power adjustment module includes a first switch circuit, a second switch circuit, and a power adjustment submodule, where:
the first switch circuit is directly connected to the second switch circuit, to form a first branch circuit; the first switch circuit is connected to the second switch circuit by means of the power adjustment submodule, to form a second branch circuit; and the first switch circuit is further connected to a service channel, and the second switch circuit is further connected to an external interface that corresponds to the service channel.

According to the signal adjustment method and apparatus, and the cell that are provided by the embodiments of the present invention, reference power expected by a receive end is used as a determining criterion, and it is ensured, by adjusting power at which an RRU at a transmit end transmits a calibration signal or adjusting power of a calibration signal received by an RRU at a receive end, that the receive end can normally receive a channel calibration signal transmitted by the transmit end, to normally perform a subsequent process of joint calibration of multiple RRUs.

### BRIEF DESCRIPTION OF DRAWINGS

To describe the technical solutions in the embodiments of the present application or in the prior art more clearly, the following briefly introduces the accompanying drawings required for describing the embodiments or the prior art. Apparently, the accompanying drawings in the following description show merely some embodiments recorded in the present application, and a person of ordinary skill in the art may still derive other drawings from these accompanying drawings.
FIG. 1 is a flowchart of Embodiment 1 of a signal adjustment method according to the present invention;
FIG. 2 is a flowchart of Embodiment 2 of a signal adjustment method according to the present invention;
FIG. 3 is a schematic structural diagram of a radio remote unit according to the present invention;
FIG. 4 is a flowchart of Embodiment 3 of a signal adjustment method according to the present invention;
FIG. 5 is a schematic diagram of Embodiment 1 of a signal adjustment apparatus according to the present invention;
FIG. 6 is a schematic diagram of Embodiment 2 of a signal adjustment apparatus according to the present invention;
FIG. 7 is a schematic diagram of Embodiment 3 of a signal adjustment apparatus according to the present invention;
FIG. 8 is a schematic diagram of a hardware structure of Embodiment 1 of a signal adjustment apparatus according to the present invention;
FIG. 9 is a schematic diagram of a hardware structure of Embodiment 2 of a signal adjustment apparatus according to the present invention; and
FIG. 10 is a schematic diagram of a hardware structure of Embodiment 3 of a signal adjustment apparatus according to the present invention.

### DESCRIPTION OF EMBODIMENTS

To enable a person skilled in the art to better understand the solutions in the present invention, the following describes the embodiments of the present invention in more detail with reference to accompanying drawings and implementation manners.

The following first briefly introduces a specific application scenario of the technical solutions of the present invention.

In a time division duplex TDD (Time Division Duplex) system, to learn a status of a downlink channel, a base station may first estimate an uplink channel by detecting a sounding reference signal SRS (Sounding Reference Signal) sent by a user equipment, and then uses, according to reciprocity between uplink and downlink of the TDD system, the estimated uplink channel as a downlink channel for beamforming. Although uplink and downlink of the TDD system are theoretically reciprocal, in an actual application, uplink and downlink channels separately introduce different radio frequency channels of a base station, and responses of these radio frequency channels are different. If ratios of transmit channel responses to receive channel responses of any two radio frequency channels are different, a final transmission effect is affected. Therefore, each radio frequency channel needs to be compensated, that is, channel calibration needs to be performed.

Coordinated multi-point transmission CoMP (Coordinated Multi-Point) is a key feature of a Long Term Evolution LTE (Long Term Evolution) system, at least one base station cell may be included on a base station side of the LTE system, and each base station cell has a base band unit BBU (Base Band Unit) and multiple radio remote units RRUs (Radio Remote Unit) connected to the BBU. As one of CoMP technologies, a joint transmission JT (Joint Transmission) technology can significantly improve quality of service and average throughput of a cell-edge user. To achieve gains brought by the JT technology to the TDD system, channel calibration also needs to be performed. Different from a single-cell beamforming technology, the JT technology requires that ratios of radio frequency transmit channel responses and radio frequency receive channel responses, which correspond to antennas of multiple cells, are the same. Even if channel calibration is separately performed in each cell, the JT technology cannot achieve expected performance if calibration between cells is not performed, that is, joint calibration of multiple RRUs needs to be performed.

When joint calibration of multiple RRUs is performed, a calibration signal is transferred between any two RRUs. For an RRU having an internal calibration function and having no calibration interface, when the calibration signal is transmitted, high power amplification needs to be performed on the calibration signal by a service channel of an RRU at a transmit end, and when the calibration signal is received, low noise amplification needs to be performed on the calibration signal by a service channel of an RRU at a receive end. To ensure reliable implementation of a subsequent joint calibration process, it is required that power of the calibration signal after high power amplification and low noise amplification meet an expectation of the RRU at the receive end, that is, the power must be consistent with reference power; otherwise, the subsequent joint calibration process cannot be implemented.

A signal adjustment method of the present invention is provided to resolve the foregoing problem, and the following describes specific implementation of the technical solutions of the present invention.

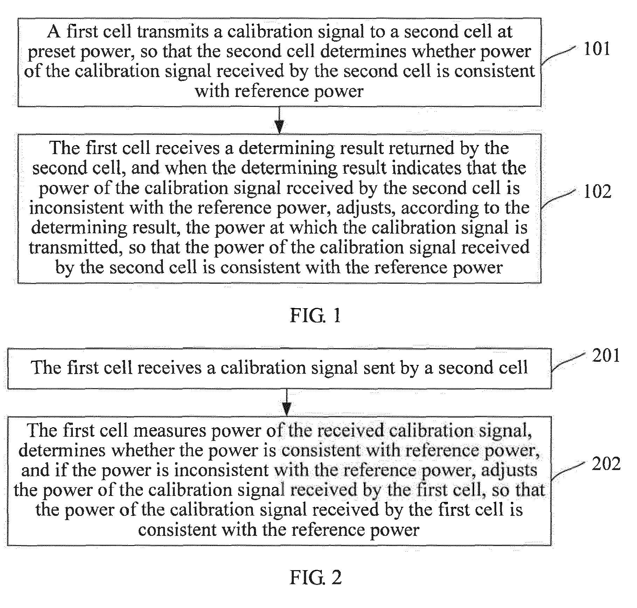

Referring to FIG. 1, FIG. 1 is a flowchart of Embodiment 1 of a signal adjustment method according to the present invention. The method mainly describes, from the perspective of a calibration signal transmit end, how to implement a signal adjustment process, that is, the method is mainly used to adjust power at which a first cell transmits a calibration signal. The method includes:

Step 101: The first cell transmits a calibration signal to a second cell at preset power, so that the second cell determines whether power of the calibration signal received by the second cell is consistent with reference power.

It may be known from the foregoing description that, when joint calibration of multiple RRUs is performed, a calibration signal needs to be transferred between two cells. Herein, a cell that transmits the calibration signal may be defined as a first cell, and a cell that receives the calibration signal may be defined as a second cell. In this embodiment, from the perspective of adjusting the power at which the first cell transmits the calibration signal, the power of the calibration signal received by the second cell is finally enabled to be consistent with the reference power, to implement a subsequent joint calibration process.

Further, the following definitions may be made: an RRU in the first cell, which specifically performs a transmission action, is defined as a first RRU, and a BBU connected to the first RRU is defined as a first BBU; an RRU in the second cell, which specifically performs a receiving action, is defined as a second RRU, and a BBU connected to the second RRU is defined as a second BBU. A specific implementation process of this step is as follows:

When calibration is required, the first BBU controls the first RRU to transmit a calibration signal to the second RRU at preset power, and the calibration signal is transmitted by using an antenna that corresponds to the first RRU, is transmitted through an air interface, and is finally received by an antenna of the second RRU. Then, the second BBU determines power of the calibration signal received by the second RRU, and compares the power with expected reference power. If the power is consistent with the expected reference power, it is considered that the second cell can perform joint calibration by using the signal of this power, and the transmit power of the first RRU does not need to be adjusted. If the power is inconsistent with the expected reference power, it is considered that the second cell cannot perform joint calibration by using the signal of this power, and the transmit power of the first RRU needs to be adjusted. In this case, the second BBU controls the second RRU to feed back, to the first RRU, a determining result indicating that signal adjustment needs to be performed, to adjust the transmit power of the first RRU.

The following further describes this step by using an example. Assuming that the preset power at which the first RRU transmits the calibration signal is 40 dB, and a signal loss in an air interface transmission process is 70 dB (where air interface loss is isolation between two RRUs, and after installation of two RRUs is completed, the air interface loss basically does not change), theoretically, the power of the calibration signal received by the second RRU is -30 dB. If the reference power is -60 dB, there is a difference of -30 dB between the power of the calibration signal received by the second RRU and the reference power, and obviously, the power of the calibration signal received by the second RRU is inconsistent with the reference power. Therefore, the second RRU returns, to the first RRU, a determining result signal indicating that the power is inconsistent with the reference power.

It should be noted that, being consistent in the present invention may be understood as that the power of the calibration signal received by the second RRU is in a threshold range determined according to the reference power, and is not necessarily strictly equal to the reference power. Certainly, in some cases that require high precision, it may also be specified that the determining result indicating that the power is consistent with the reference power is made only when the power of the calibration signal is equal to the reference power, which is not limited in the present invention.

Step 102: The first cell receives a determining result returned by the second cell, and when the determining result indicates that the power of the calibration signal received by the second cell is inconsistent with the reference power, adjusts, according to the determining result, the power at which the calibration signal is transmitted, so that the power of the calibration signal received by the second cell is consistent with the reference power.

The first RRU forwards, to the first BBU, the determining result fed back by the second RRU. If the determining result indicates that the power is inconsistent with the reference power, the first BBU adjusts, according to the determining result, the power at which the first RRU transmits the calibration signal, and the power of the calibration signal received by the second cell is finally enabled to be consistent with the reference power.

A manner for adjusting, by the first BBU, the transmit power of the first RRU according to the determining result is not described herein in detail.

It should be noted that, the determining result fed back by the second RRU may have the following two meanings:

One is that, no matter whether the power is consistent with the reference power, the second RRU feeds back a determining result to the first RRU. Correspondingly, after receiving the determining result, the first BBU needs to first identify whether the determining result indicates that the power is consistent with the reference power, that is, the first BBU determines whether the power at which the first RRU transmits the calibration signal needs to be adjusted, and then, the first BBU performs subsequent processing.

The other is that, only in a case in which the power is inconsistent with the reference power, the second RRU feeds back a determining result to the first RRU. That is, once the first BBU receives the determining result, the first BBU can directly start a process of adjusting the transmit power of the first RRU.

A manner for feeding back the determining result by the second RRU is not limited in the present invention, as long as when the power needs to be adjusted, the first cell can be accurately controlled to start the process of adjusting the transmit power.

In addition, it should be noted that, the calibration signal in this embodiment may be understood as a signal used to calibrate signal power, that is, any reference signal in general sense, or may be understood as a channel calibration signal used to perform joint calibration. However, no matter which specific type of signal is used, an objective of adjusting signal power in this embodiment can be achieved, and the difference is as follows:

If the calibration signal is any reference signal, after determining the transmit power that meets an expectation of the second cell, the first BBU further needs to control the first RRU to transmit, once to the second RRU at the determined transmit power, a channel calibration signal used to perform joint calibration. That is, after determining that the power is consistent with the reference power, the second BBU needs to control the second RRU to feed back a signal to the first RRU, so that the first RRU starts a joint calibration process, and transmits a channel calibration signal to the second RRU at the determined power.

If the calibration signal is a channel calibration signal, after determining that the power is consistent with the reference power, the second BBU can directly perform a subsequent joint calibration process by using the signal that meets the expectation, and does not need to notify the first RRU, which can simplify the signal adjustment process to some extent. In addition, because there is a difference between the reference signal and the channel calibration signal, performing signal adjustment by directly using the channel calibration signal that is used to perform a subsequent joint calibration process can ensure validity and accuracy of a determined power adjustment amount.

According to the signal adjustment method of the present invention, a second cell that receives a calibration signal determines whether the calibration signal transmitted by the first cell meets a use requirement of the second cell, and feeds back a determining result to the first cell, to control the first cell to adjust, if necessary, transmit power of the first cell in a timely and accurate manner, to ensure that when joint calibration is performed, the second cell can accurately receive and identify a channel calibration signal transmitted by the first cell, thereby implementing a process of joint calibration of multiple RRUs.

It should be noted that, if an RRU having an external calibration function does not perform joint calibration by using a calibration port, but performs joint calibration by using a service antenna (that is, through a service channel), normal implementation of a process of joint calibration of multiple RRUs having an external calibration function can also be ensured by using the solution of the present invention.

The following describes the manner for adjusting the transmit power of the first RRU according to the determining result in step 102 in this embodiment.

According to different content included in the determining result, the present invention provides the following two manners for adjusting the transmit power.

Manner 1: If the determining result includes a power adjustment indication, the transmit power of the first RRU may be gradually adjusted according to the power adjustment indication and a preset step size, until the power of the calibration signal received by the second cell is consistent with the reference power, that is, the transmit power is adjusted in a progressive manner. The power adjustment indication may be specifically embodied as a power increasing indication or a power reducing indication.

Assuming that a preset adjustment step size is 10 dB, and by still using the example in which there is a difference of -30 dB as an example, a specific adjustment process is as follows:
(1) The second BBU controls the second RRU to feed back a determining result including a power reducing indication to the first RRU. After receiving the determining result, the first RRU immediately forwards the determining result to the first BBU for identification. The first BBU first determines that the first BBU currently needs to adjust the transmit power of the first RRU, and then controls the first RRU to adjust, under action of the reducing indication, preset transmit power of the first RRU according to a preset step size. After one adjustment, the transmit power of the first RRU is 40 dB - 10 dB = 30 dB.
(2) The first BBU controls the first RRU to transmit a calibration signal at the power of 30 dB that is obtained after adjustment, where power of the calibration signal after being transmitted through an air interface and being received by the second RRU is 30 dB - 70 dB = -40 dB. Compared with the reference power of -60 dB, there is still a difference of -20 dB. Therefore, the second BBU controls the second RRU to continue to feed back, to the first RRU, a determining result including a power reducing indication.
(3) After receiving the determining result, the first RRU continues to reduce the transmit power of the first RRU according to a step size of 10 dB under control of the first BBU, and transmits a calibration signal at a power of 20 dB that is obtained after the second adjustment, for determining by the second BBU. In this example, after determining, the second BBU still considers that the power of the calibration signal received by the second RRU does not meet the expectation, and therefore, the second BBU further controls the second RRU to continue to feed back a determining result including a power reducing indication to the first RRU. This process is repeatedly performed until the second BBU determines that the power of the calibration signal received by the second RRU is consistent with the reference power.
   In this example, a requirement of the second cell can be met by simply controlling the first RRU to perform three adjustments.
(4) In the third adjustment process, the transmit power of the first RRU is adjusted to 10 dB. As there is a loss of 70 dB after transmission through the air interface, when being received by the second RRU, the calibration signal has a power of -60 dB, which is equal to the reference power. Therefore, the signal adjustment process of the present invention ends. When joint calibration is performed, the first RRU may transmit a channel calibration signal to the second RRU at the power of 10 dB.

It should be noted that, when the signal power is adjusted in this manner, a relatively large adjustment step size may be set if a high signal adjustment speed is required; and a relatively small adjustment step size may be set if high signal adjustment precision is required. A user may flexibly set the adjustment step size according to actual usage, which is not limited in the present invention.

Manner 2: If the determining result includes a power adjustment indication and an adjustment numerical value, the power at which the first RRU transmits the calibration signal may be adjusted according to the power adjustment indication and the adjustment numerical value. The power adjustment indication may be specifically embodied as a power increasing indication or a power reducing indication, and the adjustment numerical value is obtained through calculation by the second BBU.

By still using the example in which there is a difference of -30 dB as an example, a specific adjustment process is as follows:
(1) The first RRU transmits a calibration signal to the second RRU at a preset power of 40 dB. As there is a loss of 70 dB after transmission through the air interface, when being received by the second RRU, the calibration signal has a power of -30 dB. Obviously, the power is inconsistent with the reference power, and there is a difference of -60 dB - (-30 dB) = -30 dB. Therefore, the second BBU sets the power adjustment indication in the determining result to a power reducing indication, sets the adjustment numerical value to 30 dB, and then feeds back the power reducing indication and the adjustment numerical value to the first RRU.
(2) After receiving the determining result, the first RRU immediately forwards the determining result to the first BBU for identification. Similarly, the first BBU first determines that the first BBU currently needs to adjust the transmit power of the first RRU; then controls the first RRU to reduce the preset power by 30 dB according to the reducing indication, and transmits a calibration signal at the reduced power of 40 dB - 30 dB = 10 dB. In this way, the power of the calibration signal received by the second cell is equal to the reference power expected by the second cell. Therefore, the signal adjustment process of the present invention ends. Similarly, when joint calibration is performed, the first RRU may transmit a channel calibration signal to the second RRU at the power of 10 dB.

The foregoing examples are described by using the examples in which the transmit power is reduced. In an actual application, there may also be a case in which the transmit power needs to be increased. A manner for increasing the transmit power is the same as the manner for reducing the transmit power except that the power adjustment indication is set to a power increasing indication, and details are not described herein again.

It should be noted that, the manner for adjusting, by the first BBU, the transmit power of the first RRU may be embodied as: adjusting, by adjusting an attenuator, the power at which the first RRU transmits the calibration signal, and/or adjusting, by adjusting power of a baseband signal in a digital domain, the power at which the first RRU transmits the calibration signal. The digital domain has a small adjustment range, which is about 10 dB to 20 dB, and it needs to be ensured that no signal distortion occurs when the transmit power is reduced in this manner, that is, the transmit power needs to be adjusted while ensuring signal precision. Relatively, the attenuator has a large and flexible adjustment range, and therefore, the transmit power may be preferably adjusted by using the attenuator. Alternatively, the power may be adjusted by combining the two manners. For example, the digital domain has an adjustment range of 15 dB, the attenuator has an adjustment range of 60 dB, and an adjustment numerical value fed back by the second RRU to the first RRU is -75 dB. Therefore, the power can be adjusted by adjusting the digital domain and the attenuator.

Referring to FIG. 2, FIG. 2 shows a flowchart of Embodiment 2 of a signal adjustment method according to the present invention. The method mainly describes, from the perspective of a calibration signal receive end, how to implement a signal adjustment process, that is, the method is mainly used to adjust power of a calibration signal received by a first cell. The method includes:

Step 201: The first cell receives a calibration signal sent by a second cell.

Step 202: The first cell measures power of the received calibration signal, determines whether the power is consistent with reference power, and if the power is inconsistent with the reference power, adjusts the power of the calibration signal received by the first cell, so that the power of the calibration signal received by the first cell is consistent with the reference power.

Similar to Embodiment 1 of the method shown in FIG. 1, when this embodiment is implemented, a calibration signal also needs to be transferred between two cells. However, a cell that receives the calibration signal is defined as a first cell, and a cell that transmits the calibration signal is defined as a second cell. In this embodiment, from the perspective of adjusting the power of the received calibration signal, the power of the calibration signal received by the first cell is finally enabled to be consistent with the reference power.

Similarly, the following definitions further need to be made: an RRU in the first cell, which specifically performs a receiving action, is defined as a first RRU, and a BBU connected to the first RRU is defined as a first BBU; an RRU in the second cell, which specifically performs a transmission action, is defined as a second RRU, and a BBU connected to the second RRU is defined as a second BBU. A specific implementation process of this step is as follows:

When calibration is required, the second BBU controls the second RRU to transmit a calibration signal to the first RRU at preset power, and the calibration signal is transmitted by using an antenna that corresponds to the second RRU, is transmitted through an air interface, and is finally received by an antenna of the first RRU. Then, the first BBU determines power of the calibration signal received by the first RRU, and compares the power with expected reference power. If the power is consistent with the expected reference power, it is considered that the first cell can perform joint calibration by using the signal of this power, and the receive power of the first RRU does not need to be adjusted. If the power is inconsistent with the expected reference power, it is considered that the first cell cannot perform joint calibration by using the signal of this power, and the receive power of the first RRU needs to be adjusted.

The following further describes this step by using an example. Assuming that the preset power at which the second RRU transmits the calibration signal is 40 dB, and a signal loss in an air interface transmission process is 70 dB (where air interface loss is isolation between two RRUs, and after installation of two RRUs is completed, the air interface loss basically does not change), theoretically, the power of the calibration signal received by the first RRU is -30 dB. If the reference power is -60 dB, there is a difference of -30 dB between the power of the calibration signal received by the first RRU and the reference power, and obviously, the power of the calibration signal received by the first RRU is inconsistent with the reference power. Therefore, the power of the calibration signal received by the first RRU needs to be adjusted.

In this embodiment, a first RRU at a receive end does not need to feed back a determining result to a second RRU at a transmit end. After the first BBU determines that the power needs to be adjusted, the receive end completes the adjustment process, and it is the power of the calibration signal received by the first RRU that is adjusted.

Specifically, in a signal modulation method of this implementation, whether the receive power needs to be adjusted is determined in a current receiving and sending process, and a specific adjustment process is implemented in a next receiving and sending process. That is, when the second RRU transmits a calibration signal to the first RRU next time, the first RRU first needs to adjust the receive power of the first RRU by using a previous determining result, and then forwards the received calibration signal to the first BBU to determine whether the power is consistent with the reference power.

It should be noted that, the calibration signal in this embodiment preferably refers to a channel calibration signal used to perform joint calibration. In this case, after the first RRU adjusts the power of the calibration signal to be consistent with the reference power, a subsequent joint calibration process may be directly performed by using the signal, which can simplify the signal adjustment process to the greatest extent.

Certainly, as an implementation manner of this embodiment, the calibration signal may also be any reference signal in general sense. If the calibration signal is a reference signal, after determining a receive power that meets an expectation of the first RRU, the first RRU further needs to instruct the second RRU to continue to transmit a channel calibration signal to the first RRU. Correspondingly, when receiving the channel calibration signal, the first RRU receives the channel calibration signal by using the determined power, forwards the channel calibration signal to the first BBU, and performs a subsequent joint calibration process by using the channel calibration signal.

The following describes a manner for adjusting power of a received signal in step 202 in this embodiment.

Same as the manner for adjusting power in Embodiment 1, the first RRU may also adjust the power of the received calibration signal in two manners.

Manner 1: The first BBU controls the first RRU to gradually adjust, according to a preset step size, the power of the calibration signal received by the first RRU, until the power of the received calibration signal is consistent with the reference power, that is, the power is adjusted in a progressive manner, which may be specifically embodied as increasing the power or reducing the power.

If a preset adjustment step size is 10 dB, by still using the example in which there is a difference of -30 dB as an example, a specific adjustment process is as follows:

After the second RRU transmits the calibration signal to the first RRU for the first time, the first BBU may learn through comparison that power of the calibration signal currently received by the first RRU is greater than the reference power and the receive power of the first RRU needs to be reduced. Therefore, when the second RRU transmits the calibration signal to the first RRU for the second time, the second RRU starts to attempt to perform a first adjustment to reduce the receive power to -30 dB - 10 dB = -40 dB, forwards the calibration signal that is received at this power to the first BBU. The first BBU continues to compare the power with the reference power of -60 dB, and finds that the power still needs to be reduced. Therefore, when transmitting the calibration signal to the first RRU for the third time, the second RRU starts to attempt to perform a second adjustment to reduce the receive power to -40 dB - 10 dB = -50 dB. This process is repeatedly performed until the first BBU determines that the power of the received calibration signal is consistent with the reference power. In this example, a use requirement of subsequent joint calibration can be met after the first RRU attempts to perform three adjustments.

Manner 2: The first BBU calculates a difference between the power of the calibration signal received by the first RRU and the reference power, and controls the first RRU to adjust the receive power of the first RRU according to the difference.

By still using the example in which there is a difference of -30 dB as an example, the first BBU detects that the power of the calibration signal received by the first RRU is -30 dB, determines that the power is inconsistent with the reference power, and obtains through calculation that a difference between the two is -60 dB - (-30 dB) = -30 dB. In this case, the first BBU needs to control the first RRU to reduce the reference power by 30 dB at a time, so that the power of the calibration signal received by the first RRU is consistent with the reference power, and a subsequent joint calibration process can be performed by using the signal of this power.

The foregoing examples are described by using the examples in which the receive power is reduced. In an actual application, there may also be a case in which the receive power needs to be increased. A manner for increasing the receive power is the same as the manner for reducing the power, and details are not described herein again.

Specifically, the first BBU may adjust, by adjusting an attenuator, the power of the calibration signal received by the first RRU; or, may adjust, by means of cooperation between the first cell and the second cell, the power of the calibration signal received by the first RRU. By still using the example in which the power needs to be adjusted by -75 dB as an example, if an attenuator of the first cell has an adjustment range of 60 dB, the power of the received calibration signal cannot be enabled to be consistent with the reference power by simply adjusting the attenuator of the first cell. Therefore, in this case, the first cell should further instruct the second cell to adjust the power at which the second cell transmits the calibration signal, to cooperate with the first cell. It should be noted that, as described above, the second cell may adjust the transmit power of the second cell by adjusting an attenuator and/or power of a baseband signal in a digital domain, and details are not described herein again. As described above, the second cell may gradually adjust the transmit power of the second cell according to a preset step size, or may adjust the transmit power of the second cell at a time according to an adjustment numerical value, and details are not described herein again.

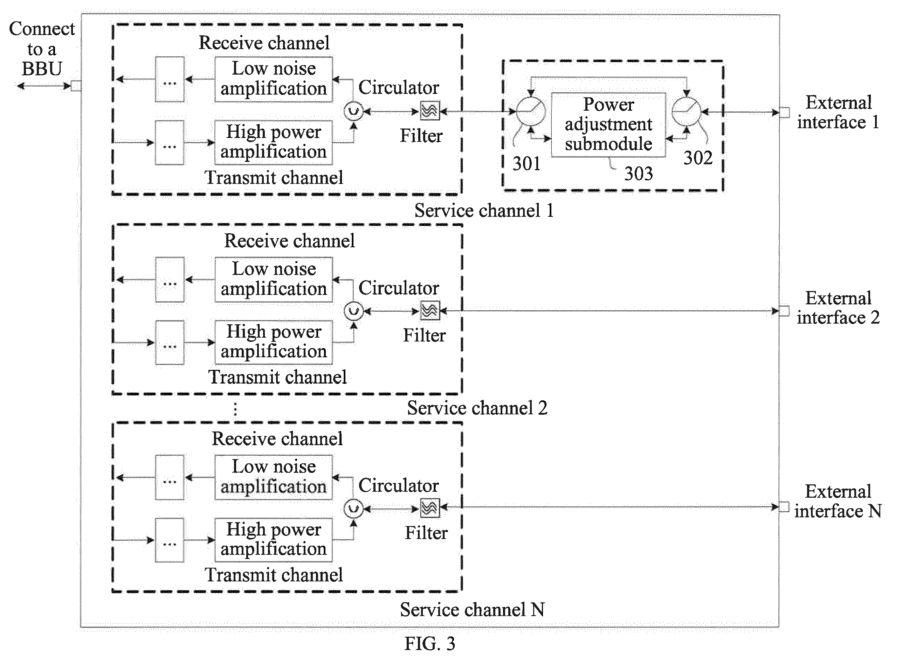

Corresponding to the foregoing method Embodiment 1 and Embodiment 2, the present invention further provides a cell for implementing the processes of the foregoing methods. For details, refer to FIG. 3. The cell includes one BBU and at least one RRU, and each RRU may further include:
a service channel (a service channel 1 shown in the figure), where the service channel corresponds to an external interface (an external interface 1 shown in the figure), and the service channel communicates with an RRU of another cell through the external interface; further, the service channel includes a service transmit channel and a service receive channel, a calibration signal may be transmitted through the service transmit channel when the RRU is used as a transmit end, and a calibration signal may be received through the service receive channel when the RRU used as is a receive end; and
a power adjustment module, where the power adjustment module is connected in series between a service channel and an external interface that are of any RRU (as shown in the figure, connected in series between the service channel 1 and the external interface 1), that is, in the at least one RRU, signal adjustment can be performed by using the solutions of Embodiment 1 and Embodiment 2 as long as a power adjustment module is connected in series between a service channel and an external interface that are of one RRU, thereby ensuring normal implementation of a joint calibration process.

As an implementation manner of the power adjustment module, the power adjustment module may include a first switch circuit 301, a second switch circuit 302, and a power adjustment submodule 303, where the first switch circuit is directly connected to the second switch circuit, to form a first branch circuit; the first switch circuit is connected to the second switch circuit by means of the power adjustment submodule, to form a second branch circuit; and the first switch circuit is further connected to the service channel, and the second switch circuit is further connected to an external interface that corresponds to the service channel.

In this case, when channel calibration is performed (where the signal adjustment process of the present invention may be considered as a premise and basis of channel calibration), transmission or receiving of a calibration signal may be implemented by using the second branch circuit. When a normal service is performed, transmission or receiving of a service signal may be implemented by using the first branch circuit. The first branch circuit has small line loss only and does not attenuate a signal, and therefore does not affect the normal service.

With reference to the schematic diagram shown in FIG. 3, the following briefly describes implementation processes of Embodiment 1 and Embodiment 2 of the present invention.

For Embodiment 1, a first RRU, as a transmit end, must be a new RRU shown in FIG. 3, and a second RRU, as a receive end, may not be limited, that is, either an old RRU (which does not include the power adjustment module) or a new RRU may be used as the second RRU, which does not affect the signal adjustment process of the present invention. When signal adjustment needs to be performed, a calibration signal that is transmitted through a service transmit channel needs to be adjusted by the power adjustment submodule, and then transmitted to the second RRU.

For Embodiment 2, a first RRU, as a receive end, must be a new RRU shown in FIG. 3, and a second RRU, as a transmit end, may not be limited, that is, either an old RRU or a new RRU may be used as the second RRU, which does not affect the signal adjustment process of the present invention. When signal adjustment needs to be performed, a calibration signal is adjusted by the power adjustment submodule and then received by a service receive channel (where the calibration signal specifically refers to a channel calibration signal), to perform a subsequent joint calibration process.

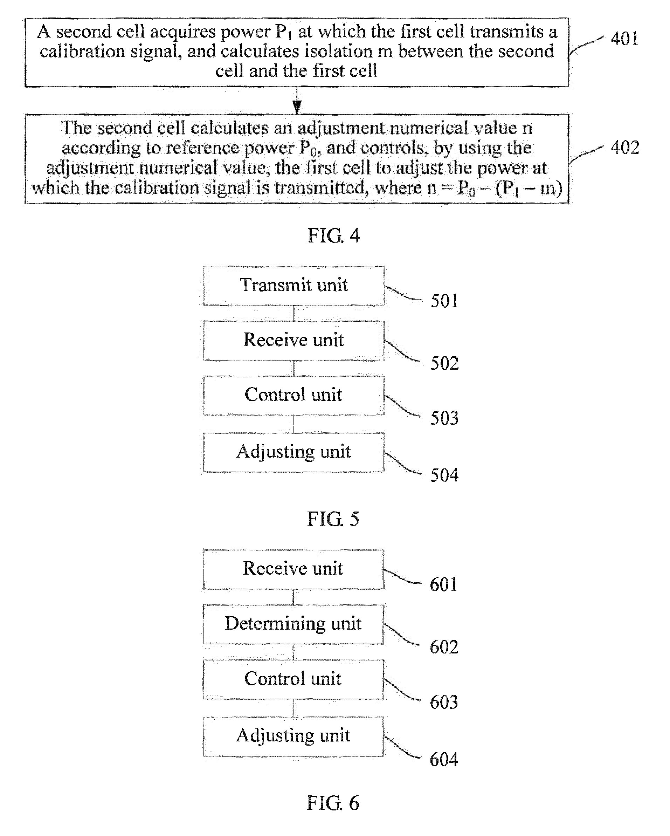

Referring to FIG. 4, FIG. 4 shows a flowchart of Embodiment 3 of a signal adjustment method according to the present invention. The method is used to adjust power at which a first cell transmits a calibration signal, and the method includes:

Step 401: A second cell acquires power P₁ at which the first cell transmits a calibration signal, and calculates isolation m between the second cell and the first cell.

Step 402: The second cell calculates an adjustment numerical value n according to reference power P₀, and controls, by using the adjustment numerical value, the first cell to adjust the power at which the calibration signal is transmitted, where n = P₀ - (P₁ - m).

In this embodiment, a cell that transmits the calibration signal is defined as a first cell, and a cell that receives the calibration signal is defined as a second cell. Different from Embodiment 1 and Embodiment 2, in this embodiment, signal power needs to be adjusted after an RRU is installed, or it may be understood as that, after an RRU is installed, how to adjust signal power is determined first, and at this time, a communication process between RRUs of two cells is not involved yet. This is mainly because that power of a calibration signal in the second cell may be obtained through detection by a second BBU (where in Embodiment 1 and Embodiment 2, the power is obtained through detection by a BBU at a receive end when two RRUs communicate), or may be obtained through calculation (that is, the solution used in Embodiment 3).

Two pieces of data are involved in the process of obtaining through calculation the power of the calibration signal received by the second cell: one is preset power P₁ at which the first RRU transmits the calibration signal, which may be notified to the second BBU in advance by means of a manual input or by setting a default value before delivery; the other is loss in air interface transmission, that is, isolation m between two RRUs, where the value of the isolation basically does not change after the two RRUs are installed, that is, the second BBU may also learn the data in advance. In this way, the second BBU can calculate a theoretical power value P₂ of the calibration signal in the second cell according to the two pieces of data, where P₂ = P₁ - m, and then can calculate, according to the reference power P₀ expected by the second cell, an adjustment numerical value n for adjusting the power of the calibration signal from P₂ to P₀. Because the isolation between the two RRUs does not change with the transmit power, if the power of the calibration signal of the second cell needs to be adjusted from P₂ to P₀, the transmit power of the first RRU is adjusted correspondingly from P₁ to (P₁ - n) without the need of considering the isolation.

According to the solution of this embodiment, when an RRU is installed, an adjustment numerical value n is determined first, and when joint calibration needs to be performed, a second RRU sends the adjustment numerical value n to a first RRU, so that a first BBU adjusts, according to the adjustment numerical value n, preset power P₁ of the first RRU, and controls the first RRU to transmit a channel calibration signal to the second RRU according to power (P₁ - n) obtained after adjustment. In this way, it can be ensured that the channel calibration signal received by the second RRU meets a requirement of reference power, and the signal can be directly used to perform a subsequent joint calibration process.

An equation for the isolation between the two RRUs is: isolation = -antenna gain of the first RRU - lobe directive gain from the first RRU to the second RRU - lobe directive gain from the second RRU to the first RRU - antenna gain of the second RRU + space loss between an antenna of the first RRU and an antenna of the second RRU. The antenna gains are fixed. For the lobe directive gains, beam azimuths in horizontal and vertical planes need to be measured on site, and then a corresponding directive gain is found according to a beam directivity pattern of this type of antenna. In addition, considering that there is a line of sight path and basically no scatterer in an air interface environment between the RRUs, the space loss may be calculated according to a free space propagation model.

It should be noted that, for such a solution in which how to adjust signal power is determined first after installation, in addition to the content described above in which when the power needs to be adjusted, an adjustment numerical value is sent to a transmit end and a BBU at the transmit end controls an RRU to adjust the power, an adjustment component, such as an adjustment switch, an adjustment knob, an adjustment key, or a touchscreen having an input function, may be further set outside the RRU at the transmit end, to implement a power adjustment process by manually adjusting the adjustment component.

In addition, correspondingly, the solution shown in FIG. 4 may be further performed by a cell that transmits a calibration signal, and a specific process may be briefly described as follows:

First, the cell that transmits the calibration signal is defined as a first cell, and a cell that receives the calibration signal is defined as a second cell. Second, a first BBU in the first cell needs to learn the following three pieces of data: transmit power P₁ of a first RRU, isolation m, and reference power P₀ of the second cell; obtains through calculation an adjustment numerical value n according to the three pieces of data, where n = (P₀ + m) - P₁, and (P₀ + m) indicates corresponding transmit power of the first RRU when the calibration signal received by the second cell meets the reference power; and adjusts P₁ according to the value, so that the second cell finally receives a calibration signal that meets an expectation of the second cell. Compared with Embodiment 3, in this solution, when joint calibration needs to be performed, a receive end does not need to notify a transmit end of a power adjustment status, that is, the transmit end may directly transmit, according to power obtained after adjustment, a channel calibration signal to the receive end if necessary without the need of peer communication, which simplifies a signal modulation process.

Corresponding to Embodiment 1 of the method, the present invention further provides Embodiment 1 of a signal adjustment apparatus, where the signal adjustment apparatus is configured to adjust power at which a first cell transmits a calibration signal. Referring to FIG. 5, the apparatus includes a transmit unit 501, a receive unit 502, a control unit 503, and an adjusting unit 504, where:
the transmit unit is configured to transmit a calibration signal to a second cell at preset power, so that the second cell determines whether power of the calibration signal received by the second cell is consistent with reference power;
the receive unit is configured to receive a determining result returned by the second cell; and
the control unit is configured to: when the determining result received by the receive unit indicates that the power of the calibration signal received by the second cell is inconsistent with the reference power, control the adjusting unit to adjust, according to the determining result, the power at which the transmit unit transmits the calibration signal, so that the power of the calibration signal received by the second cell is consistent with the reference power.

In this embodiment, a cell that transmits the calibration signal is defined as a first cell, and a cell that receives the calibration signal is defined as a second cell. From the perspective of adjusting the power at which the first cell transmits the calibration signal, the power of the calibration signal received by the second cell is finally enabled to be consistent with the reference power.

Specifically, a manner for controlling, by the control unit, the adjusting unit to adjust the transmit power varies with different content included in the determining result returned by the second cell, which may be embodied as:
if the determining result includes a power adjustment indication, the control unit is specifically configured to control the adjusting unit to gradually adjust, according to the power adjustment indication and a preset step size, the power at which the transmit unit transmits the calibration signal, until the power of the calibration signal received by the second cell is consistent with the reference power; or,
if the determining result includes a power adjustment indication and an adjustment numerical value, the control unit is specifically configured to control the adjusting unit to adjust, according to the power adjustment indication and the adjustment numerical value, the power at which the transmit unit transmits the calibration signal.

It may be known from the descriptions of the embodiments of the method in the foregoing that, in this embodiment, the transmit unit maybe embodied as a service transmit channel of a first RRU, the receive unit may be embodied as a service receive channel of the first RRU, the control unit may be embodied as a first BBU, and the adjusting unit may be embodied as a power adjustment module in the first RRU.

Corresponding to Embodiment 2 of the method, the present invention further provides Embodiment 2 of a signal adjustment apparatus, where the signal adjustment apparatus is configured to adjust power of a calibration signal received by a first cell. Referring to FIG. 6, the apparatus includes a receive unit 601, a determining unit 602, a control unit 603, and an adjusting unit 604, where:
the receive unit is configured to receive a calibration signal sent by a second cell;
the determining unit is configured to measure power of the calibration signal received by the receive unit, and determine whether the power is consistent with reference power; and
the control unit is configured to: when the determining unit determines that the power is inconsistent with the reference power, control the adjusting unit to adjust the power of the calibration signal received by the receive unit, so that the power of the calibration signal received by the receive unit is consistent with the reference power.

In this embodiment, a cell that transmits the calibration signal is defined as a second cell, and a cell that receives the calibration signal is defined as a first cell. From the perspective of adjusting the power of the received calibration signal, the power of the calibration signal received by the first cell is finally enabled to be consistent with the reference power.

Specifically, a manner for controlling, by the control unit, the adjusting unit to adjust the receive power may be embodied as the following two manners:
the control unit is specifically configured to control the adjusting unit to gradually adjust, according to a preset step size, the power of the calibration signal received by the receive unit, until the power of the calibration signal received by the receive unit is consistent with the reference power; or
the control unit is specifically configured to calculate a difference between the power of the calibration signal received by the receive unit and the reference power, and control the adjusting unit to adjust, according to the difference, the power of the calibration signal received by the receive unit.

It may be known from the descriptions of the embodiments of the method in the foregoing that, in this embodiment, the receive unit may be embodied as a service receive channel of a first RRU, both the determining unit and the control unit may be embodied as a first BBU, and the adjusting unit may be embodied as a power adjustment module in the first RRU.

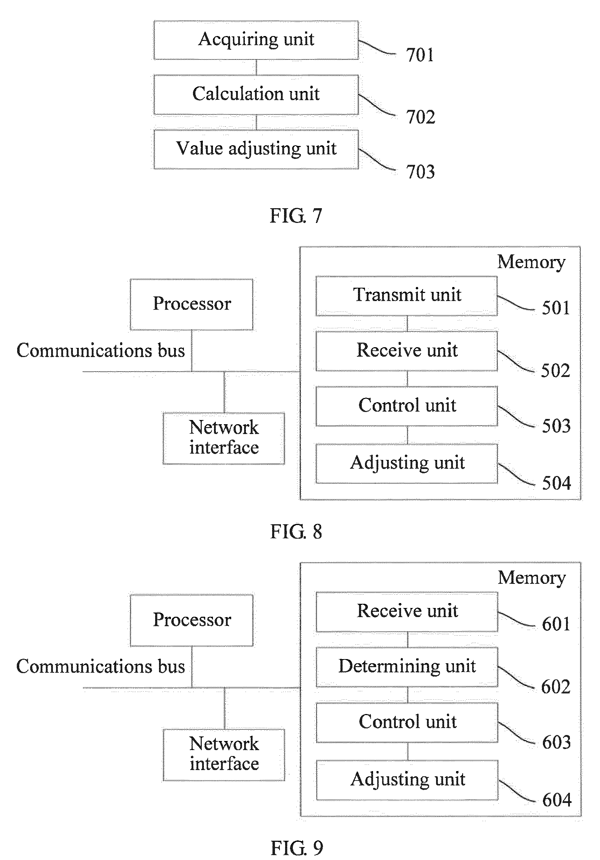

Corresponding to Embodiment 3 of the method, the present invention further provides Embodiment 3 of a signal adjustment apparatus, where the signal adjustment apparatus is configured to adjust power at which a first cell transmits a calibration signal. As shown in FIG. 7, the apparatus includes:
an acquiring unit 701, configured to acquire power P₁ at which the first cell transmits a calibration signal;
a calculation unit 702, configured to calculate isolation m between a second cell and the first cell; and
a value adjusting unit 703, configured to calculate an adjustment numerical value n according to reference power P₀, and control, by using the adjustment numerical value, the first cell to adjust the power at which the calibration signal is transmitted, where n = P₀ - (P₁ - m).

In this embodiment, a cell that transmits the calibration signal is defined as a first cell, and a cell that receives the calibration signal is defined as a second cell. Different from Embodiment 1 and Embodiment 2, in this embodiment, signal power is adjusted after an RRU is installed, or it may be understood as that, after an RRU is installed, how to adjust signal power is determined first, and at this time, a communication process between RRUs of two cells is not involved yet. In the solution of this embodiment, power of a calibration signal at a receive end is obtained through calculation, and in Embodiment 1 and Embodiment 2, power of a calibration signal at a receive end is obtained through detection.

According to the solution of this embodiment, when an RRU is installed, an adjustment numerical value n is determined first, and when joint calibration needs to be performed, a second RRU sends the adjustment numerical value n to a first RRU, so that a first BBU adjusts, according to the adjustment numerical value n, preset power P₁ of the first RRU, and controls the first RRU to transmit a calibration signal (herein, the calibration signal is specifically embodied as a channel calibration signal) to the second RRU according to power (P₁ - n) obtained after adjustment. In this way, it can be ensured that the calibration signal received by the second RRU meets a requirement of reference power, and the signal can be directly used to perform a subsequent joint calibration process.

Similarly, correspondingly, the solution of Embodiment 3 of the apparatus may also be implemented by a calibration signal transmit end, that is, an apparatus for adjusting transmit power of a first cell is provided, where the apparatus includes:
an acquiring unit, configured to acquire reference power P₀ of a second cell;
a calculation unit, configured to calculate isolation m between the first cell and the second cell; and
a value adjusting unit, configured to calculate an adjustment numerical value n according to transmit power P₁ of the first cell, and control, by using the adjustment numerical value, the first cell to adjust the power at which the calibration signal is transmitted, where n = (P₀ + m) - P₁.

In this embodiment, a cell that transmits the calibration signal is defined as a first cell, and a cell that receives the calibration signal is defined as a second cell. Compared with Embodiment 3, in the solution of this embodiment, when joint calibration needs to be performed, a receive end does not need to notify a transmit end of a power adjustment status, that is, the transmit end may directly transmit, according to power obtained after adjustment, a channel calibration signal to the receive end if necessary without the need of peer communication, which simplifies a signal modulation process.

Further, an embodiment of the present invention further provides a hardware structure of a signal adjustment apparatus. The hardware structure may include at least one processor (such as a CPU), at least one network interface or another communications interface, a memory, and at least one communications bus that is configured to implement connection and communication between these apparatuses. The processor is configured to execute an executable module, such as a computer program, stored in the memory. The memory may include a high-speed random access memory (RAM: Random Access Memory), and may also include a non-volatile memory (non-volatile memory), such as at least one magnetic disk storage. Communication and connection between a system gateway and at least one other network element are implemented by using at least one network interface (which may be wired or wireless), and the Internet, a wide area network, a local network, a metropolitan area network, or the like may be used.

Referring to FIG. 8, in some implementation manners, the memory stores a program instruction, and the program instruction may be executed by the processor, where the program instruction includes a transmit unit 501, a receive unit 502, a control unit 503, and an adjusting unit 504. For specific implementation of the units, refer to corresponding units disclosed in FIG. 5.

Referring to FIG. 9, in some implementation manners, the memory stores a program instruction, and the program instruction may be executed by the processor, where the program instruction includes a receive unit 601, a determining unit 602, a control unit 603, and an adjusting unit 604. For specific implementation of the units, refer to corresponding units disclosed in FIG. 6.

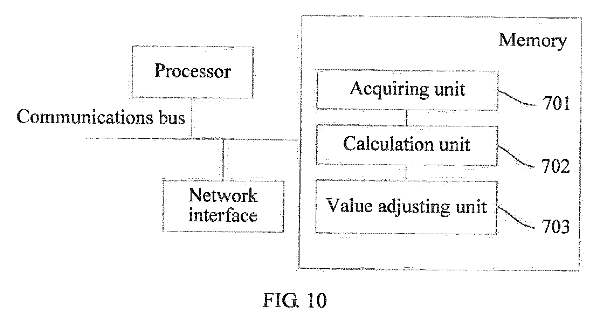

Referring to FIG. 10, in some implementation manners, the memory stores a program instruction, and the program instruction may be executed by the processor, where the program instruction includes an acquiring unit 701, a calculation unit 702, and a value adjusting unit 703. For specific implementation of the units, refer to corresponding units disclosed in FIG. 7.

The solutions in the present invention can be described in the general context of executable computer instructions executed by a computer, for example, a program unit. Generally, the program unit includes a routine, a program, an object, a component, a data structure, and the like for executing a particular task or implementing a particular abstract data type. The solutions in the present invention may also be practiced in distributed computing environments in which tasks are performed by remote processing devices that are connected by using a communications network. In a distributed computing environment, program units may be located in both local and remote computer storage media including storage devices.

The embodiments in this specification are all described in a progressive manner, for same or similar parts in the embodiments, refer to these embodiments, and each embodiment focuses on a difference from other embodiments. Especially, an apparatus embodiment is basically similar to a method embodiment, and therefore is described briefly; for related parts, refer to partial descriptions in the method embodiment. The described apparatus embodiment is merely exemplary. The units described as separate parts may or may not be physically separate, and parts displayed as units may or may not be physical units, may be located in one position, or may be distributed on a plurality of network units. Some or all of the modules may be selected according to actual requirements to achieve the objectives of the solutions of the embodiments. A person of ordinary skill in the art may understand and implement the embodiments of the present invention without creative efforts.

The embodiments of the present invention are described above in detail. In this specification, specific implementation manners are used to describe the present invention, and the description of the embodiments is only intended to help understand the method and device of the present invention. Meanwhile, a person of ordinary skill in the art may, based on the idea of the present invention, make modifications to the specific implementation manners and the application scope. Therefore, the content of this specification shall not be construed as a limitation to the present invention.

## Claims

1. A signal adjustment method, used to adjust power at which a first cell transmits a calibration signal, wherein the method comprises:
Transmitting, by the first cell, a calibration signal to a second cell at preset power, so that the second cell determines whether power of the calibration signal received by the second cell is consistent with reference power; and
Receiving, by the first cell, a determining result returned by the second cell, and when the determining result indicates that the power of the calibration signal received by the second cell is inconsistent with the reference power, adjusting, according to the determining result, the power at which the calibration signal is transmitted, so that the power of the calibration signal received by the second cell is consistent with the reference power.

2. The method according to claim 1, wherein if the determining result comprises a power adjustment indication, the adjusting, according to the determining result, the power at which the calibration signal is transmitted comprises:
gradually adjusting, by the first cell according to the power adjustment indication and a preset step size, the power at which the calibration signal is transmitted, until the power of the calibration signal received by the second cell is consistent with the reference power.

3. The method according to claim 1, wherein if the determining result comprises a power adjustment indication and an adjustment numerical value, the adjusting, according to the determining result, the power at which the calibration signal is transmitted comprises:
adjusting, by the first cell according to the power adjustment indication and the adjustment numerical value, the power at which the calibration signal is transmitted.

4. The method according to any one of claims 1 to 3, wherein a manner for adjusting, by the first cell, the power at which the calibration signal is transmitted is:
adjusting, by using an attenuator, the power at which the calibration signal is transmitted, and/or adjusting, by using a baseband signal in a digital domain, the power at which the calibration signal is transmitted.

5. The method according to any one of claims 1 to 4, wherein the determining, by the second cell, whether power of the calibration signal received by the second cell is consistent with reference power comprises:
receiving, by a radio remote unit of the second cell, the calibration signal, and determining, by a base band unit of the second cell, whether the power of the calibration signal is consistent with the reference power.

6. The method according to any one of claims 1 to 4, wherein the receiving, by the first cell, a determining result returned by the second cell, and adjusting, according to the determining result, the power at which the calibration signal is transmitted comprises:
receiving, by a radio remote unit of the first cell, the determining result, and controlling, by a base band unit of the first cell according to the determining result, the radio remote unit of the first cell to adjust the power at which the calibration signal is transmitted.

7. A signal adjustment method, used to adjust power of a calibration signal received by a first cell, wherein the method comprises:
Receiving, by the first cell, a calibration signal sent by a second cell; and
Measuring, by the first cell, power of the received calibration signal, determining whether the power is consistent with reference power, and if the power is inconsistent with the reference power, adjusting the power of the calibration signal received by the first cell, so that the power of the calibration signal received by the first cell is consistent with the reference power.

8. The method according to claim 7, wherein the adjusting the power of the calibration signal received by the first cell comprises:
gradually adjusting, by the first cell according to a preset step size, the power of the calibration signal received by the first cell, until the power of the calibration signal received by the first cell is consistent with the reference power.

9. The method according to claim 7, wherein the adjusting the power of the calibration signal received by the first cell comprises:
calculating, by the first cell, a difference between the power of the received calibration signal and the reference power, and adjusting, according to the difference, the power of the calibration signal received by the first cell.

10. The method according to any one of claims 7 to 9, wherein a manner for adjusting the power of the calibration signal received by the first cell is:
adjusting the power of the received calibration signal by using an attenuator.

11. The method according to any one of claims 7 to 10, wherein the measuring, by the first cell, power of the received calibration signal, and determining whether the power is consistent with reference power comprises:
measuring, by a base band unit of the first cell, the power of the calibration signal received by a radio remote unit of the first cell, and determining whether the power is consistent with the reference power.

12. The method according to any one of claims 7 to 10, wherein the adjusting the power of the calibration signal received by the first cell comprises:
controlling, by a base band unit of the first cell, a radio remote unit of the first cell to adjust the power of the received calibration signal.

13. A signal adjustment apparatus, configured to adjust power at which a first cell transmits a calibration signal, wherein the apparatus comprises a transmit unit, a receive unit, a control unit, and an adjusting unit, wherein:
the transmit unit is configured to transmit a calibration signal to a second cell at preset power, so that the second cell determines whether power of the calibration signal received by the second cell is consistent with reference power;
the receive unit is configured to receive a determining result returned by the second cell; and
the control unit is configured to: when the determining result received by the receive unit indicates that the power of the calibration signal received by the second cell is inconsistent with the reference power, control the adjusting unit to adjust, according to the determining result, the power at which the transmit unit transmits the calibration signal, so that the power of the calibration signal received by the second cell is consistent with the reference power.

14. The apparatus according to claim 13, wherein if the determining result comprises a power adjustment indication,
the control unit is specifically configured to control the adjusting unit to gradually adjust, according to the power adjustment indication and a preset step size, the power at which the transmit unit transmits the calibration signal, until the power of the calibration signal received by the second cell is consistent with the reference power.

15. The apparatus according to claim 13, wherein if the determining result comprises a power adjustment indication and an adjustment numerical value,
the control unit is specifically configured to control the adjusting unit to adjust, according to the power adjustment indication and the adjustment numerical value, the power at which the transmit unit transmits the calibration signal.

16. A signal adjustment apparatus, configured to adjust power of a calibration signal received by a first cell, wherein the apparatus comprises a receive unit, a determining unit, a control unit, and an adjusting unit, wherein:
the receive unit is configured to receive a calibration signal sent by a second cell;
the determining unit is configured to measure power of the calibration signal received by the receive unit, and determine whether the power is consistent with reference power; and
the control unit is configured to, control the adjusting unit to adjust the power of the calibration signal received by the receive unit when the determining unit determines that the power is inconsistent with the reference power, so that the power of the calibration signal received by the receive unit is consistent with the reference power.

17. The apparatus according to claim 16, wherein:
the control unit is specifically configured to control the adjusting unit to gradually adjust, according to a preset step size, the power of the calibration signal received by the receive unit, until the power of the calibration signal received by the receive unit is consistent with the reference power.

18. The apparatus according to claim 16, wherein:
the control unit is specifically configured to calculate a difference between the power of the calibration signal received by the receive unit and the reference power, and control the adjusting unit to adjust, according to the difference, the power of the calibration signal received by the receive unit.

19. A cell, the cell comprises a base band unit and at least one radio remote unit, the radio remote unit comprises a service channel, and the service channel corresponds to an external interface that can communicate with another cell, wherein:
the radio remote unit further comprises a power adjustment module, and the power adjustment module is connected in series between a service channel and an external interface that arc of any radio remote unit; and
the power adjustment module is configured to adjust, under control of the base band unit, power at which the cell transmits a calibration signal, or is configured to adjust, under control of the base band unit, power of a calibration signal received by the cell.

20. The cell according to claim 19, the power adjustment module comprises a first switch circuit, a second switch circuit, and a power adjustment submodule, wherein:
the first switch circuit is directly connected to the second switch circuit, to form a first branch circuit; the first switch circuit is connected to the second switch circuit by means of the power adjustment submodule, to form a second branch circuit; and the first switch circuit is further connected to a service channel, and the second switch circuit is further connected to an external interface that corresponds to the service channel.
